# EUROPEAN PATENT SPECIFICATION

(11) **EP 3 641 348 B1**
(45) Date of publication and mention of the grant of the patent: **05.07.2023**
(21) Application number: 19203222.5
(22) Date of filing: 15.10.2019
(51) Int. Cl.: H04W 4/02, H04W 4/38, H04W 12/08, H04W 12/04, H04W 12/63

(54) **ACCESS TO A SERVICE**
ZUGANG ZU EINEM DIENST
ACCÈS À UN SERVICE

(30) Priority: 16.10.2018 FI 20185873
(43) Date of publication of application: 22.04.2020
(73) Proprietor: Telia Company AB, 169 94 Solna (SE)
(72) Inventor: HUBER, Michael, 18742 TÄBY (SE)
(74) Representative: Berggren Oy

(56) References cited:
- WO-A1-2007/061255
- WO-A1-2015/104224
- WO-A2-2008/095178
- US-A1- 2011 202 466
- US-A1- 2013 252 583

## Description

### TECHNICAL FIELD

The invention concerns in general the technical field of communications. More particularly, the invention concerns determining an access right to a service of a communication network.

### BACKGROUND

Today wireless communication networks are available in almost every area. The wireless communication networks may be implemented as mobile communication networks or as wireless local area networks, such as Wi-Fi networks. As regards to the wireless local area networks there is typically arranged a network controller which is configured to control an operation of the wireless local area network and the devices, such as base stations, therein. One specific task of the network controller may be an access control of terminal devices to the wireless local area in question. For example, the network controller may be configured to receive network access requests from terminal devices and to determine, based on predetermined criteria, if the terminal device in question may access the wireless local network or not.

On the other hand there are a plurality of mechanisms by means of which it is possible to determine a position of a terminal device within an area. For especially outdoor positioning there is e.g. available a satellite-based positioning system, such as a GPS system, which is widely available. Further, there are a numerous number of solutions especially dedicated for indoor positioning, such as those which are based on so-called anchor nodes which are at known positions and which are configured to broadcast individual beacon signals. The terminal devices roaming within the area receive these beacon signals and based on those the terminal devices may determine its position, for example. On the other hand, some positioning solutions are based on an implementation in which a plurality of sensors are installed in an area, which are arranged to listen a communication within the area. Typically, the sensors are arranged to monitor a certain type of communication, such as a communication originating from a terminal device and having predetermined pieces of information included in the communication. Based on the received communication in the sensors it is possible to determine a position of the terminal device by a control node.

An example of a document disclosing a prior art positioning system is WO 2015/104224 A1. Another document WO 2008/095178 A1 discloses aspects to accessing to a computer network. A further document WO 2007/061255 A1 describes a use of a token with position information.

As may be seen from above the todays terminal devices are capable of communicating with different systems. Hence, it would be advantageous to utilize capabilities of different systems in order to achieve some further effect, such as an improved access control to services available through a wireless communication network.

### SUMMARY

The following presents a simplified summary in order to provide basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

An objective of the invention is to present a method, a network controller, a communication system and a computer program product for determining an access right to a communication service.

The objectives of the invention are reached by a method, a network controller, a communication system and a computer program product as defined by the respective independent claims.

According to a first aspect, a method for determining an access right to a communication service is provided, the method comprises: generating, by a network controller, at least one token for at least one terminal device, a generation of the at least one token comprising a transmit of the at least one token to the at least one terminal device (110); receiving, by the network controller, data from at least one sensor device, the data comprising at least the at least one token and information from which a position of the terminal device is derivable; determining, by the network controller, an access right to the communication service by: determining that the at least one token is valid, the token being one of: an encryption key for communicating in a wireless local area network available in an area the terminal device resides, a data string comprising one or more randomly selected characters; determining the position of the terminal device from the data from which the position of the terminal device is derivable; comparing the position of the terminal device with a reference value; and generating, in accordance with a result of the determining that the token received from the at least one sensor device is valid and a result of the comparison of the position of the terminal device with the reference value, an indication representing a right to access to the communication service.

A generation of the at least one token may be performed in response to a request received from the terminal device.

A determination of the access right to the communication service may further comprise: determining, by the network controller, if the received data comprises the at least one token generated by the network controller. The determination may be performed by comparing the token comprised in the data received from the at least one sensor device to data stored in data storage in response to a generation of the at least one token.

An individual token may be generated, by the network controller, for each terminal device.

Further, the position of the terminal device may be derived from a measurement data received from the at least one sensor device by the network controller. The measurement data may comprise at least one measurement value representing at least one parameter of a signal received by the at least one sensor device.

The communication service may be provided to the terminal device in response to a detection that the generated indication represents an allowance of a service provision.

According to a second aspect, a network controller is provided, the network controller comprising: at least one processor; at least one memory including computer program code; the at least one memory and the computer program code configured to, with the at least one processor, cause the network controller to perform: generate at least one token for at least one terminal device, a generation of the at least one token comprising a transmit of the at least one token to the at least one terminal device; receive data from at least one sensor device, the data comprising at least the at least one token and information from which a position of the terminal device is derivable; determine an access right to the communication service by: determining that the at least one token is valid, the token being one of: an encryption key for communicating in a wireless local area network available in an area the terminal device resides, a data string comprising one or more randomly selected characters; determining the position of the terminal device from the data from which the position of the terminal device is derivable; comparing the position of the terminal device with a reference value; and generating, in accordance with a result of the determining that the token received from the at least one sensor device is valid and a result of the comparison of the position of the terminal device with the reference value, an indication representing a right to access to the communication service.

The network controller may be arranged to perform a generation of the at least one token in response to a request received from the terminal device.

The network controller may be arranged to perform the determination of the access right by determining if the received data comprises the at least one token generated by the network controller. The network controller may be arranged to perform the determining by comparing the token comprised in the data received from the at least one sensor device to data stored in data storage in response to a generation of the at least one token.

Further, the network controller may be arranged to generate an individual token for each terminal device.

The network controller may be arranged to derive the position of the terminal device from a measurement data received from the at least one sensor device by the network controller. For example, the measurement data may comprise at least one measurement value representing at least one parameter of a signal received by the at least one sensor device.

The network controller may also be arranged to provide the communication service to the terminal device in response to a detection that the generated indication represents an allowance of a service provision.

According to a third aspect, a communication system is provided, the communication system comprising: at least one network controller, and at least one sensor device, wherein the system the at least one network controller is arranged to: generate at least one token for at least one terminal device, a generation of the at least one token comprising a transmit of the at least one token to the at least one terminal device; receive data from at least one sensor device, the data comprising at least the at least one token and information from which a position of a terminal device is derivable; determine an access right to a communication service by: determining that the at least one token is valid, the token being one of: an encryption key for communicating in a wireless local area network available in an area the terminal device resides, a data string comprising one or more randomly selected characters; determining the position of the terminal device from the data from which the position of the terminal device is derivable; comparing the position of the terminal device with a reference value; and generating, in accordance with a result of the determining that the token received from the at least one sensor device is valid and a result of the comparison of the position of the terminal device with the reference value, an indication representing a right to access to the communication service; and wherein the system the at least one sensor device is arranged to: receive data from at least one terminal device.

According a fourth aspect, a computer program product for determining an access right to a communication service is provided which, when executed by at least one processor, cause a network controller to perform the method as described above.

The expression "a number of" refers herein to any positive integer starting from one, e.g. to one, two, or three.

The expression "a plurality of" refers herein to any positive integer starting from two, e.g. to two, three, or four.

Various exemplifying and non-limiting embodiments of the invention both as to constructions and to methods of operation, together with additional objects and advantages thereof, will be best understood from the following description of specific exemplifying and non-limiting embodiments when read in connection with the accompanying drawings.

The verbs "to comprise" and "to include" are used in this document as open limitations that neither exclude nor require the existence of unrecited features. The features recited in dependent claims are mutually freely combinable unless otherwise explicitly stated. Furthermore, it is to be understood that the use of "a" or "an", i.e. a singular form, throughout this document does not exclude a plurality.

### BRIEF DESCRIPTION OF FIGURES

The embodiments of the invention are illustrated by way of example, and not by way of limitation, in the figures of the accompanying drawings.
Figure 1 illustrates schematically a communication environment into which the present invention may be implemented to.
Figure 2 illustrates schematically a method according to an embodiment of the invention.
Figure 3 illustrates schematically a data structure according to an embodiment of the invention.
Figure 4 illustrates schematically a network controller according to an embodiment of the invention.
Figure 5 illustrates schematically a terminal device according to an embodiment of the invention.
Figure 6 illustrates schematically a sensor device according to an embodiment of the invention.

### DESCRIPTION OF THE EXEMPLIFYING EMBODIMENTS

The specific examples provided in the description given below should not be construed as limiting the scope and/or the applicability of the appended claims. Lists and groups of examples provided in the description given below are not exhaustive unless otherwise explicitly stated.

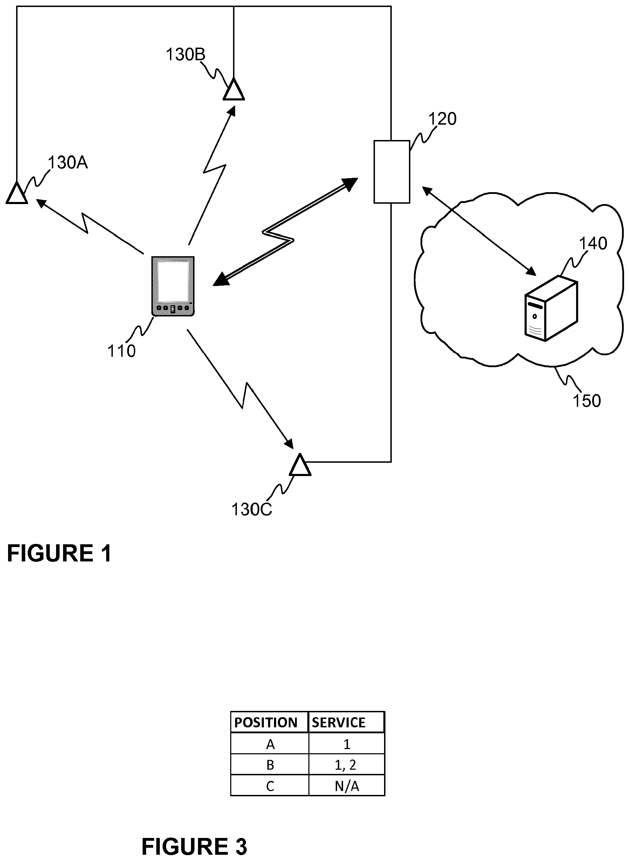

Figure 1 illustrates schematically a communication environment into which the present invention may be implemented to. The communication system according to an embodiment of the invention may comprise at least one network controller 120 and at least one sensor device 130A, 130B, 130C for serving a mobile terminal device 110 which may roam within the area. The term 'area' shall be understood in a broad manner e.g. covering both indoor areas and outdoor areas in which the wireless local area network controlled by at least one network controller 120 may be available and wherein a positioning system may be implemented, the positioning system comprising one or more sensor devices 130A, 130B, 130C arranged to receive one or more signals from the terminal device 110. In the non-limiting example as schematically illustrated in Figure 1 the network controller 120 is arranged to provide a short-range wireless communication network, such as a Wi-Fi network, for use in the area i.e. the network controller 120 may e.g. be configured to perform a functionality of a base station or control one or more base stations arranged in the area. Moreover, the network controller 120 may be, according to an embodiment of the present invention, communicatively coupled to the sensor devices 130A, 130B, 130C either directly or indirectly. The communicative coupling may be implemented in a wired or a wireless manner. As is commonly known the network controller 120 may establish a communication path to the terminal device 110 towards a service implemented in a network node 140, such as in a server. The network node 150 may, thus, be accessible over a communication network 150, such as the Internet if an access right is provided to the terminal device 110 by the network controller 120 in a manner as will be described. Furthermore, the sensor devices 130A, 130B, 130C may be configured to receive the one or more signals from the terminal device 110 with an applicable wireless communication technology, such as Wi-Fi, Li-Fi or Bluetooth. In some embodiment it may be arranged that the sensor device 130A, 130B, 130C is arranged in a base station implementing a service for the wireless local area network in question.

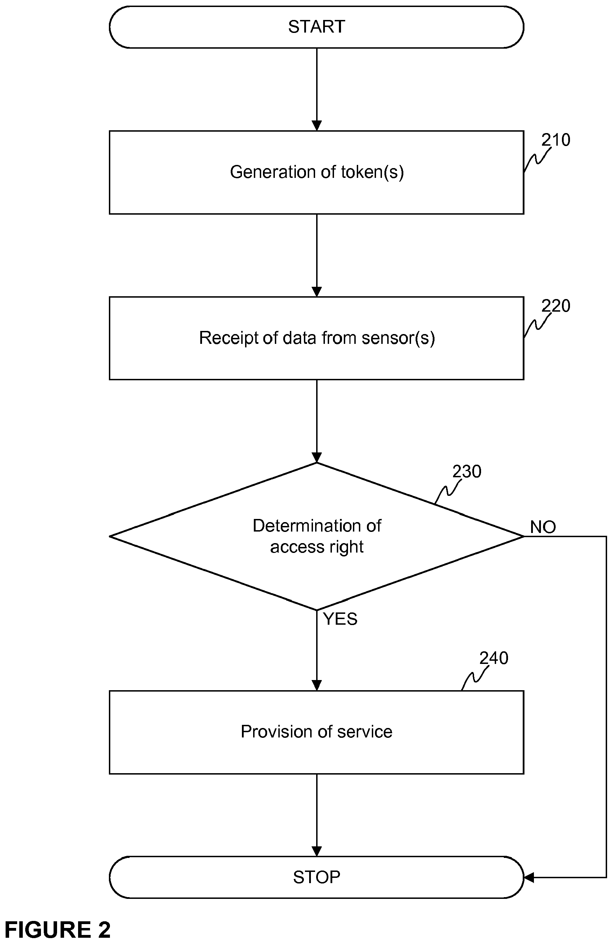

Next, some aspects of the present invention are discussed by referring to Figure 2 in which a method according to an embodiment of the invention is schematically illustrated. The method of Figure 2 is disclosed from a perspective of the network controller 120.

### Regarding step 210:

According to an embodiment of the invention the network controller 120 is configured to generate one or more tokens for a terminal device 110 roaming within an area the network controller 120 serves. The token may be a data string which is to be utilized by the terminal device 110 as will be described. The token may e.g. be an encryption key for communicating in the wireless local area network or it may be a data string comprising one or more randomly generated characters. Advantageously, the data string is such that it is not easily derivable by a third party, such as a hacker.

The network controller 120 may be configured to generate the token in response to a detection of a predetermined event by the network controller 120. According to an embodiment of the invention the predetermined event may be a detection of a request, from the terminal device 110, to connect to a service over the wireless local area network served by the network controller 120. The terminal device 110 may be arranged to perform such a request automatically or in response to a predetermined action by a user of the terminal device. The request may carry further information, such as an identifier of the user or the terminal device 110 and/or an indication of the service the terminal device 110 intends to use through the wireless local area network if access right is granted to the terminal device 110. A non-limiting example of the indication may e.g. be a network address of a network node 140 providing the service in the communication network 150.

According to an embodiment of the invention the network controller 120 may be arranged to store information on the generated tokens in a data storage, such as in an internal memory, accessible to it with any other information, such as with the identifier of the terminal device 110.

The generation of the token shall be understood to comprise a step of creating the token, but also a transmit of it to the terminal device 110.

Still further, the generation of the tokens 210 may be arranged so that the network controller 120 may be arranged to renew the generated tokens at intervals. In other words, the network controller 120 may be configured to generate new tokes at predetermined intervals and configured to deliver the new tokens, or the token, to the terminal device 110. The renewal may e.g. be arranged to occur in every X second, such as in every 5^{th} second.

The generation of the token for the terminal devices 110 roaming within the area may be arranged so that for each terminal device 110 an individual token is generated e.g. in response to the request. Alternatively, it may be arranged that the network controller 120 is arranged to generate a common token and broadcast it in the wireless local area network it serves. Hence, in the latter implementation the generation of the token does not necessary occur in response to a receipt of a request in the network controller 120, but it may be arranged to occur at predetermined instants of time (i.e. time based), for example.

### Regarding step 220:

As described above in the context of the description of the step 210 the terminal device 110, or terminal devices 110, receives a token generated by the network controller 120. In response to the receipt of the token the terminal device 110 may e.g. be arranged to initiate an establishment of a connection to at least one sensor 130A, 130B, 130C being within an operational area of the communication technology used for the establishment of the connection initiated by the terminal device 110. The communication connection may e.g. be a broadcast type of connection or bi-directional communication connection. The used communication technology may e.g. be Wi-Fi, Li-Fi or Bluetooth, as non-limiting examples. The establishment of the connection may e.g. be initiated with an application e.g. arranged to be activated in response to the receipt of the token by the terminal device 110.

The terminal device 110 may be arranged, e.g. by means of the application, to deliver predetermined data, i.e. pieces of information, over the established communication connection. The pieces of information may at least comprise the token received from the network controller 120. Additionally, the pieces of information may comprise data applicable to verify an authenticity of the signal if necessary. For example, the pieces of information may comprise a ping value of the message in which the information is deliverable. Alternatively or in addition, an identifier of the user or the terminal device 110 may be included in the pieces of information delivered over the communication connection.

In response to a receipt of the information by one or more sensor devices 130A, 130B, 130C the sensor devices 130A, 130B, 130C may be arranged to deliver at least part of the data, such as some of the received pieces of information, to the network controller 120. In addition, the sensor devices 130A, 130B, 130C may be arranged to add additional information to the information, i.e. to the data, delivered to the network controller 120. Such additional information may e.g. be signal strength related information, time related information or anything similar which typically relates to the positioning method used. In other words, the at least one sensor 130A, 130B, 130C may be arranged to measure one or more parameters of the signals received from the terminal device 110. The parameters to be measured may e.g. be received signal strength, angle of arrival or time of arrival or any combination of these as non-limiting examples. For sake of clarity the signal received from the terminal device 110 may carry any kind of data from which it is possible to determine the position of the terminal device 110 with a predetermined accuracy either directly or indirectly, such as an identifier of the sensor device 130A, 130B, 130C in question whose exact position within the area is derivable by the network controller 120.

Hence, in step 220 the network controller 120 receives the data from the sensor devices 130A, 130B, 130C e.g. in the manner as described. The received information comprises the token originally generated by the network controller 120 and information from which a position of the terminal device may be derived either directly or indirectly. In some embodiment the position may be derived from pieces of information received from a plurality of sensor devices 130A, 130B, 130C. Still further, the information may comprise data relating to security aspects, as discussed above.

The receipt of information, by the network controller 120, may occur in a continuous manner i.e. the sensor devices 130A, 130B, 130C are arranged to generate reports to the network controller 120 under a predetermined scheme.

### Regarding step 230:

In response to the receipt of the data from at least one of the sensor device 130A, 130B, 130C in accordance with the implementation the network controller 120 is arranged to determine an access right of the terminal device 110 to a communication service. At this stage the network controller 120 may be aware of a service the terminal device is willing to use or not. The network controller 120 may have received the information on the service in a request of service discussed in the context of the step 210, or it may have been indicated in the communication with the at least one sensor device 130A, 130B, 130C. Alternatively or in addition, the network controller 120 is not aware of the service the terminal device 110 intends to request, but the network controller 120 is arranged to decide if the terminal device 110 may access to any external service over the wireless local area network it serves.

The determination of the access right comprises a step in which the network controller 110 is arranged to determine if the data received from the at least one sensor device 130A, 130B, 130C includes a data string corresponding the token that is generated by the network controller 120 in step 210. In other words, the network controller 120 may be arranged to maintain a data structure implemented e.g. as a database for storing the generated tokens.

The data in the database may be stored on a terminal device 110 basis or in a general manner especially if a common token is generated for a plurality of the terminal devices 110. The determination if the token received from the at least one sensor device 130A, 130B, 130C is valid may be arranged so that the network controller 120 is arranged to generate a query towards the data structure wherein the query comprises at least the data string of the token as a parameter. Moreover, the query may also comprise an identifier of the sensor device 130A, 130B, 130C from which the piece of data is received as another parameter. Still further, an identifier of the terminal device 110 may also be included in the query if it is applied in the implementation. The data structure may return a response if the inquired token exists in the data structure or not.

In addition to the determination if the token includes a data sting corresponding to one that is generated by the network controller 120 the network controller 120 is arranged to derive the additional information from the data received from the at least one sensor device 130A, 130B, 130C and e.g. to determine a position of the terminal device 110 from the additional information in a manner specific to the positioning system. The determination of the position may e.g. refer to an implementation in which the pieces of additional information from the plurality of the sensor devices 130A, 130B, 130C are used as such e.g. by comparing the pieces of information to corresponding comparison values. Alternatively or in addition, the network controller 120 may be arranged to determine the position of the terminal device 110 based on the pieces of additional information by combining the pieces of information in a predetermined manner. For example, the position may be determined on a basis of signal strengths experienced e.g. in at least three sensor devices 130A, 130B, 130C in a commonly known manner. Further, the position may also be determined by obtaining an identifier of the sensor device 130A, 130B, 130C from the data and to obtain a position of it from data storage for representing a position of the terminal device 110 with it. As may be seen the positioning method may be selected according to a desired accuracy of the system.

In response to the determination of at least the position, but also possibly the validity of the tokens e.g. in the manner as described above the network controller 120 is configured to determine 230 if an access may be granted to the terminal device 110 to a service. According to an embodiment of the invention the determination may be based, at least in part, to a comparison of the position information of the terminal device 110 to information defining access rights to one or more services in accordance with a position. In other words, the network controller 120 may be arranged to have access to information defining the access rights to the services in accordance with the position. The information may be stored in data storage accessible to the network controller 120, such as in an internal memory of the controller 120. According to an embodiment the network controller 120 may be arranged to inquire from the data storage the access right e.g. by including the position information to the inquiry possibly with other information. The other information may e.g. be piece of data defining a requested service. By means of the mentioned parameters the data storage, implemented e.g. as a database, may be arranged to return a piece of information indicating if the terminal device 110 may be provided access to the requested service or not in the position it resides.

### Regarding step 240:

In response to a detection, in the step 230, that the terminal device 110 may be provided access to the service, necessary steps are taken for providing the service to the terminal device 110. This may comprise, but is not limited to, a generation of an acknowledgement signal to the terminal device 110, but possibly also a generation of a signal towards the requested service by the network controller 120. Moreover, the network controller 120 may be arranged to establish a session internally for monitoring purposes.

As becomes clear from the Figure 2 in response to a detection that the terminal device 110 may not be granted an access to the service, the process may be discontinued at least temporarily. According to an embodiment of the invention the network controller 120 may be arranged to generate an information message to the terminal device 110 in order to inform e.g. the user of the terminal device on a non-access to the service. Further instructions may be included in the information message.

Figure 3 illustrates schematically a non-limiting example of a data structure which may be maintained in the data storage accessible by the network controller 120. The data structure may define services (e.g. service 1, service 2, none (N/A)) accessible from different positions (A, B, C) within the area. The positions may define one or more point-like positions within the area, or they may define sub-areas (i.e. a plurality of point-like positions) of the area. Now, if the network controller 120 defines, based on the information received from the terminal device 110, that the terminal device 110 resides in a certain area, the network controller 120 may receive, in response to the query, information defining the service or services available for the terminal device 110 from a position the terminal device 110 resides. Naturally, other criteria may exist for accessing the service, such as valid tokens as described above.

As may be derived from the description above the terminal device 110 and the network controller 120 may establish a communication connection e.g. over the communication technology the wireless local area network is implemented to. This may e.g. be achieved so that an application executed in the terminal device 110 is arranged to detect wireless local area networks, such as Wi-Fi networks, in the area the terminal device 110 is roaming and initiate a communication with the network controller 120 controlling the wireless local area network e.g. through a base station. The communication with the network controller 110 comprises at least some of the method steps as described e.g. in the context of the description of Figure 2.

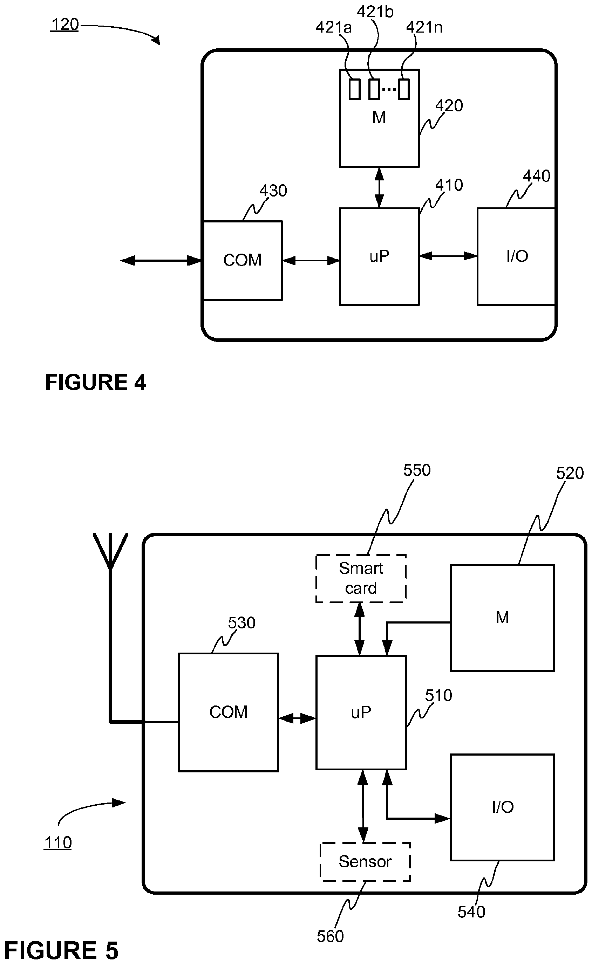

An example of a network controller device 120 according to an embodiment of the invention is schematically illustrated in Figure 4. The network controller 120 may be configured to implement at least part of the method for determining access right to at least one service as described. The execution of the method, or at least some portions of it, may be achieved by arranging at least one processor 410 to execute at least some portion of computer program code 421a-421n stored in at least one memory 420 causing the processor 410, and, thus, the network controller 120 to implement one or more method steps as described. In other words, the processor 410 may be arranged to access the memory 420 and to retrieve and to store any information therefrom and thereto. Moreover, the processor 410 may be configured to control a communication through one or more communication interfaces 430 for accessing a communication network 150, but also to the sensor devices 130A, 130B, 130C, the terminal device 110 and other entities, such as data storage, as described. Hence, the communication interface 430 may be arranged to implement, possibly under control of the processor 410, corresponding communication protocols, such as an IP and/or a protocol implemented by the wireless local area network, for communicating with one or more entities. The term communication interface 430 shall be understood in a broad manner comprising necessary hardware and software elements, such as antenna(s) and TX/RX radio parts, for implementing the communication techniques. Further, the network controller 120 in question may comprise one or more input/output devices 440 for inputting and outputting information. Such input/output devices may e.g. be keyboard, buttons, touch screen, display, loudspeaker, microphone camera and so on. In some implementation of the network controller 120 at least some of the input/output devices may be external to the network controller 120 and coupled to it either wirelessly or in a wired manner. For sake of clarity, the processor 410 herein refers to any unit or a plurality of units suitable for processing information and control the operation of the network controller 120 in general at least in part, among other tasks. The mentioned operations may e.g. be implemented with a microcontroller solution with embedded software. Similarly, the invention is not limited to a certain type of memory 420, but any memory unit or a plurality of memory units suitable for storing the described pieces of information, such as portions of computer program code and/or parameters, may be applied in the context of the present invention. Moreover, at least the mentioned entities may be arranged to be at least communicatively coupled to each other with an internal data connection, such as with a data bus.

Some aspects of the present invention may relate to a computer program product which, when executed by at least one processor, cause a network controller 120 to perform at least some portions of the method as described.

Figure 5 illustrates schematically a non-limiting example of a terminal device 110 suitable of utilizing the invention and, hence, interworking with the invention. The terminal device 110 may comprise at least one processor 510 arranged to control an operation of the terminal device 110. The terminal device 110 may also comprise at least one memory 520, at least one communication interface 530 and one or more input/output devices 540 for inputting and outputting information. The memory 520 may be arranged to store computer program code, but also further data, such as parameter data and any other data e.g. obtained and generated by the terminal device 110. Further, the input/output devices 540 may correspond the ones mentioned in the context of the network controller 120, for example. Further, the terminal device 110 may comprise a smart card 550 which may be needed e.g. in accessing to a wireless communication network, such as to a mobile communication network. For example, the smart card may operate as a subscriber identity module (SIM) for the mobile communication network. Still further, the terminal device 110 may comprise one or more sensors for obtaining measurement data. In some embodiment, the sensor 560 may obtain information for positioning the terminal device 110.

The communication interface 530 of the terminal device 110 refers to hardware and software implementation by means of which the terminal device 110 may be arranged, e.g. under control of the processor 510, to communicate with one or more communication technologies with other entities. Hence, the terminal device 110 is arranged to be capable of communicating at least with the network controller 120 and with one or more sensor devices 130A, 130B, 130C.

For example, the terminal device 110 may be arranged to communicate with Wi-Fi technology and with Bluetooth technology.

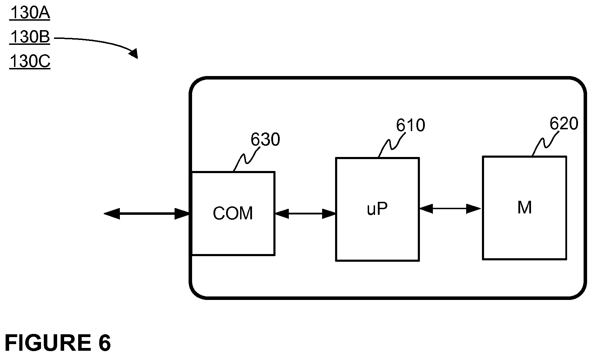

Figure 6, in turn, illustrates schematically an example of a sensor device 130A, 130B, 130C according to an embodiment of the invention. The sensor device 130A, 130B, 130C may comprise at least one processor 610, at least one memory 620 storing e.g. computer program code and other data and a communication interface 630. The sensor device 130A, 130B, 130C may be controlled by the processor 610 and the communication interface 630 may be arranged to implement a communication technology selected for communicating with the terminal device 110, such as the Bluetooth. The communication interface 630 may also be arranged to enable the communication between the sensor device 130A, 130B, 130C and the network controller 120 at least in the manner as described.

The present invention as described with non-limiting examples herein is at least in part based on an idea in which an access to a network service may be defined based on a position of a terminal device in a manner as described.

The specific examples provided in the description given above should not be construed as limiting the applicability and/or the interpretation of the appended claims. Lists and groups of examples provided in the description given above are not exhaustive unless otherwise explicitly stated.

## Claims

1. A method for determining an access right to a communication service, the method comprising:
generating (210), by a network controller (120), at least one token for at least one terminal device (110), a generation of the at least one token comprising a transmit of the at least one token to the at least one terminal device (110),
receiving (220), by the network controller (120), data from at least one sensor device (130A, 130B, 130C), the data comprising at least the at least one token and information from which a position of the terminal device (110) is derivable, determining (230), by the network controller (120), an access right to the communication service by:
determining that the at least one token is valid, the token being one of: an encryption key for communicating in a wireless local area network available in an area the terminal device (110) resides, a data string comprising one or more randomly selected characters,
determining the position of the terminal device (110) from the data from which the position of the terminal device (110) is derivable,
comparing the position of the terminal device (110) with a reference value, and
generating, in accordance with a result of the determining that the token received from the at least on sensor device (130A, 130B, 130C) is valid and a result of the comparison of the position of the terminal device (110) with the reference value, an indication representing a right to access to the communication service.

2. The method of claim 1, wherein the generating of the at least one token (210) is performed in response to a request received from the terminal device (110).

3. The method of any of the preceding claims wherein the determining (230) of the access right to the communication service further comprising:
determining, by the network controller (120), if the received data comprises the at least one token generated by the network controller (120).

4. The method of claim 3, wherein the determining is performed by comparing the token comprised in the data received from the at least one sensor device (130A, 130B, 130C) to data stored in data storage in response to a generation (210) of the at least one token.

5. The method of any of the preceding claims, wherein an individual token is generated, by the network controller (120), for each terminal device (110).

6. The method of any of the preceding claims, wherein the position of the terminal device (110) is derived from a measurement data received from the at least one sensor device (130A, 130B, 130C) by the network controller (120).

7. The method of claim 6, wherein the measurement data comprises at least one measurement value representing at least one parameter of a signal received by the at least one sensor device (130A, 130B, 130C).

8. The method of any of the preceding claims, wherein the communication service is provided to the terminal device (110) in response to a detection that the generated indication represents an allowance of a service provision.

9. A network controller (120) comprising:
at least one processor (410);
at least one memory (420) including computer program code (421a-421n);
wherein the at least one memory (420) and the computer program code (421a-421n) are configured to, with the at least one processor (410) cause the network controller (120) to perform:
generate (210) at least one token for at least one terminal device (110), a generation of the at least one token comprising a transmit of the at least one token to the at least one terminal device (110),
receive (220) data from at least one sensor device (130A, 130B, 130C), the data comprising at least the at least one token and information from which a position of the terminal device (110) is derivable,
determine (230) an access right to the communication service by:
determining that the at least one token is valid, the token being one of: an encryption key for communicating in a wireless local area network available in an area the terminal device (110) resides, a data string comprising one or more randomly selected characters,
determining the position of the terminal device (110) from the data from which the position of the terminal device (110) is derivable,
comparing the position of the terminal device (110) with a reference value, and
generating, in accordance with a result of the determining that the token received from the at least one sensor device (130A, 130B, 130C) is valid and a result of the comparison of the position of the terminal device (110) with the reference value, an indication representing a right to access to the communication service.

10. The network controller (120) of claim 9, wherein the network controller (120) is arranged to perform the generating of the at least one token (210) in response to a request received from the terminal device (110).

11. The network controller (120) of any of the preceding claims 9 or 10, wherein the network controller (120) is arranged to perform the determining of the access right by
determining if the received data comprises the at least one token generated by the network controller (120).

12. The network controller (120) of claim 11, wherein the network controller (120) is arranged to perform the determining by comparing the token comprised in the data received from the at least one sensor device (130A, 130B, 130C) to data stored in data storage in response to a generation (210) of the at least one token.

13. The network controller (120) of any of the preceding claims 9-12, wherein the network controller (120) is arranged to generate an individual token for each terminal device (110).

14. The network controller (120) of any of the preceding claims 9-13, wherein the network controller (120) is arranged to derive the position of the terminal device (110) from a measurement data received from the at least one sensor device (130A, 130B, 130C) by the network controller (120).

15. The network controller (120) of claim 14, wherein the measurement data comprises at least one measurement value representing at least one parameter of a signal received by the at least one sensor device (130A, 130B, 130C).

16. The network controller (120) of any of the preceding claims 9-15, wherein the network controller (120) is arranged to provide the communication service to the terminal device (110) in response to a detection that the generated indication represents an allowance of a service provision.

17. A communication system comprising:
at least one network controller (120), and
at least one sensor device (130A, 130B, 130C),
wherein the at least one network controller (120) is arranged to:
generate (210) at least one token for at least one terminal device (110), a generation of the at least one token comprising a transmit of the at least one token to the at least one terminal device (110),
receive (220) data from at least one sensor device (130A, 130B, 130C), the data comprising at least the at least one token and information from which a position of a terminal device (110) is derivable,
determine (230) an access right to a communication service by:
determining that the at least one token is valid, the token being one of: an encryption key for communicating in a wireless local area network available in an area the terminal device (110) resides, a data string comprising one or more randomly selected characters,
determining the position of the terminal device (110) from the data from which the position of the terminal device (110) is derivable, comparing the position of the terminal device (110) with a reference value, and
generating, in accordance with a result of the determining that the token received from the at least one sensor device (130A, 130B, 130C) is valid and a result of the comparison of the position of the terminal device (110) with the reference value, an indication representing a right to access to the communication service,
and wherein the at least one sensor device (130A, 130B, 130C) is arranged to:
deliver data comprising at least the at least one token and information from which a position of the terminal device (110) is derivable.

18. A computer program product for determining an access right to a communication service wherein the computer program product, when executed by at least one processor comprised in a network controller, cause the network controller (120) to perform the method according to any of claims 1-8.

## Patentansprüche

1. Verfahren zum Bestimmen eines Zugangsrechts zu einem Kommunikationsdienst, wobei das Verfahren Folgendes umfasst:
Erzeugen (210), durch eine Netzwerksteuerung (120), mindestens eines Tokens für mindestens ein Endgerät (110), wobei ein Erzeugen des mindestens einen Tokens ein Übertragen des mindestens einen Tokens an das mindestens eine Endgerät (110) umfasst,
Empfangen (220), durch eine Netzwerksteuerung (120), von Daten von mindestens einer Sensorvorrichtung (130A, 130B, 130C), wobei die Daten mindestens das mindestens eine Token und Informationen umfassen, aus denen eine Position des Endgeräts (110) ableitbar ist,
Bestimmen (230), durch eine Netzwerksteuerung (120), eines Zugriffsrechts auf den Kommunikationsdienst durch:
Bestimmen, dass das mindestens eine Token gültig ist, wobei das Token eines von Folgendem ist: einem Verschlüsselungsschlüssel zum Kommunizieren in einem drahtlosen lokalen Netzwerk, das in einem Bereich verfügbar ist, in dem sich das Endgerät (110) befindet, einer Datenfolge, die ein oder mehrere zufällig ausgewählte Zeichen umfasst,
Bestimmen der Position des Endgeräts (110) aus den Daten, aus denen die Position des Endgeräts (110) ableitbar ist,
Vergleichen der Position des Endgeräts (110) mit einem Referenzwert, und
Erzeugen einer Angabe, die ein Recht auf Zugang zu dem Kommunikationsdienst darstellt, in Übereinstimmung mit einem Ergebnis der Bestimmung, dass der von der mindestens einen Sensorvorrichtung (130A, 130B, 130C) empfangene Token gültig ist, und einem Ergebnis des Vergleichs der Position des Endgeräts (110) mit dem Referenzwert.

2. Verfahren nach Anspruch 1, wobei das Erzeugen des mindestens einen Tokens (210) als Reaktion auf eine von dem Endgerät (110) empfangene Anfrage durchgeführt wird.

3. Verfahren nach einem der vorhergehenden Ansprüche, wobei das Bestimmen (230) des Zugriffsrechts auf den Kommunikationsdienst ferner Folgendes umfasst:
Bestimmen durch die Netzwerksteuerung (120), ob die empfangenen Daten das mindestens eine Token umfassen, das durch die Netzwerksteuerung (120) erzeugt wurde.

4. Verfahren nach Anspruch 3, wobei das Bestimmen durch Vergleichen des in den von der mindestens einen Sensorvorrichtung (130A, 130B, 130C) empfangenen Daten enthaltenen Tokens mit im Datenspeicher gespeicherten Daten als Reaktion auf eine Erzeugung (210) des mindestens einen Tokens durchgeführt wird.

5. Verfahren nach einem der vorangehenden Ansprüche, wobei durch die Netzwerksteuerung (120) für jedes Endgerät (110) ein individuelles Token erzeugt wird.

6. Verfahren nach einem der vorhergehenden Ansprüche, wobei die Position des Endgeräts (110) von Messdaten abgeleitet wird, die von dem mindestens eine Sensorvorrichtung (130A, 130B, 130C) durch die Netzwerksteuerung (120) empfangen werden.

7. Verfahren nach Anspruch 6, wobei die Messdaten mindestens einen Messwert umfassen, der mindestens einen Parameter eines Signals darstellt, das von der mindestens einen Sensorvorrichtung (130A, 130B, 130C) empfangen wird.

8. Verfahren nach einem der vorangehenden Ansprüche, wobei der Kommunikationsdienst dem Endgerät (110) als Reaktion auf eine Erfassung bereitgestellt wird, dass die erzeugte Angabe eine Genehmigung einer Dienstbereitstellung darstellt.

9. Netzwerksteuerung (120), umfassend:
mindestens einen Prozessor (410);
mindestens einen Speicher (420) mit Computerprogrammcode (421a-421n);
wobei der mindestens eine Speicher (420) und der Computerprogrammcode (421a-421n) konfiguriert sind, um zusammen mit dem mindestens einen Prozessor (410) zu bewirken, dass die Netzwerksteuerung (120) Folgendes ausführt:
Erzeugen (210) mindestens eines Tokens für mindestens ein Endgerät (110), wobei ein Erzeugen des mindestens einen Tokens ein Übertragen des mindestens einen Tokens an das mindestens eine Endgerät (110) umfasst,
Empfangen (220) von Daten von mindestens einer Sensorvorrichtung (130A, 130B, 130C), wobei die Daten mindestens das mindestens eine Token und Informationen umfassen, aus denen eine Position des Endgeräts (110) ableitbar ist,
Bestimmen (230) eines Zugriffsrechts auf den Kommunikationsdienst durch:
Bestimmen, dass das mindestens eine Token gültig ist, wobei das Token eines von Folgendem ist: einem Verschlüsselungsschlüssel zum Kommunizieren in einem drahtlosen lokalen Netzwerk, das in einem Bereich verfügbar ist, in dem sich das Endgerät (110) befindet, einer Datenfolge, die ein oder mehrere zufällig ausgewählte Zeichen umfasst,
Bestimmen der Position des Endgeräts (110) aus den Daten, aus denen die Position des Endgeräts (110) ableitbar ist,
Vergleichen der Position des Endgeräts (110) mit einem Referenzwert, und
Erzeugen in Übereinstimmung mit einem Ergebnis der Bestimmung, dass das von der mindestens einen Sensorvorrichtung (130A, 130B, 130C) empfangene Token gültig ist, und einem Ergebnis des Vergleichs der Position des Endgeräts (110) mit dem Referenzwert, einer Angabe, die ein Recht auf Zugang zu dem Kommunikationsdienst darstellt.

10. Netzwerksteuerung (120) nach Anspruch 9, wobei die Netzwerksteuerung (120) angeordnet ist, um das Erzeugen des mindestens einen Tokens (210) als Antwort auf eine von dem Endgerät (110) empfangene Anforderung durchzuführen.

11. Netzwerksteuerung (120) nach einem der vorhergehenden Ansprüche 9 oder 10, wobei die Netzwerksteuerung (120) eingerichtet ist, die Bestimmung des Zugriffsrechts durch Folgendes durchzuführen
Bestimmen, ob die empfangenen Daten das mindestens eine von der Netzwerksteuerung (120) erzeugte Token umfassen.

12. Netzwerksteuerung (120) nach Anspruch 11, wobei die Netzwerksteuerung (120) angeordnet ist, um das Bestimmen durch Vergleichen des in den von der mindestens einen Sensorvorrichtung (130A, 130B, 130C) empfangenen Daten enthaltenen Tokens mit im Datenspeicher gespeicherten Daten als Reaktion auf eine Erzeugung (210) des mindestens einen Tokens durchzuführen.

13. Netzwerksteuerung (120) nach einem der vorhergehenden Ansprüche 9 bis 12, wobei die Netzwerksteuerung (120) eingerichtet ist, ein individuelles Token für jedes Endgerät (110) zu erzeugen.

14. Netzwerksteuerung (120) nach einem der vorhergehenden Ansprüche 9 bis 13, wobei die Netzwerksteuerung (120) angeordnet ist, um die Position des Endgeräts (110) aus Messdaten abzuleiten, die von der mindestens einen Sensorvorrichtung (130A, 130B, 130C) durch die Netzwerksteuerung (120) empfangen werden.

15. Netzwerksteuerung (120) nach Anspruch 14, wobei die Messdaten mindestens einen Messwert umfassen, der mindestens einen Parameter eines Signals darstellt, das von der mindestens einen Sensorvorrichtung (130A, 130B, 130C) empfangen wird.

16. Netzwerksteuerung (120) nach einem der vorhergehenden Ansprüche 9 bis 15, wobei die Netzwerksteuerung (120) so angeordnet ist, dass sie den Kommunikationsdienst für das Endgerät (110) als Reaktion auf eine Erfassung bereitstellt, dass die erzeugte Anzeige eine Erlaubnis einer Dienstbereitstellung darstellt.

17. Kommunikationssystem, umfassend:
mindestens eine Netzwerksteuerung (120), und
mindestens eine Sensorvorrichtung (130A, 130B, 130C),
wobei die mindestens eine Netzwerksteuerung (120) eingerichtet ist, um:
mindestens einen Token für mindestens ein Endgerät (110) zu erzeugen (210), wobei ein Erzeugen des mindestens einen Tokens ein Übertragen des mindestens einen Tokens an das mindestens eine Endgerät (110) umfasst,
Empfangen (220) von Daten von mindestens einer Sensorvorrichtung (130A, 130B, 130C), wobei die Daten mindestens das mindestens eine Token und Informationen umfassen, aus denen eine Position eines Endgeräts (110) ableitbar ist,
Bestimmen (230) eines Zugangsrechts zu einem Kommunikationsdienst durch:
Bestimmen, dass das mindestens eine Token gültig ist, wobei das Token eines von Folgendem ist: einem Verschlüsselungsschlüssel zum Kommunizieren in einem drahtlosen lokalen Netzwerk, das in einem Bereich verfügbar ist, in dem sich das Endgerät (110) befindet, einer Datenfolge, die ein oder mehrere zufällig ausgewählte Zeichen umfasst,
Bestimmen der Position des Endgeräts (110) aus den Daten, aus denen die Position des Endgeräts (110) ableitbar ist,
Vergleichen der Position des Endgeräts (110) mit einem Referenzwert, und
Erzeugen in Übereinstimmung mit einem Ergebnis der Bestimmung, dass das von der mindestens einen Sensorvorrichtung (130A, 130B, 130C) empfangene Token gültig ist, und einem Ergebnis des Vergleichs der Position des Endgeräts (110) mit dem Referenzwert, einer Angabe, die ein Recht auf Zugang zum Kommunikationsdienst darstellt,
und wobei die mindestens eine Sensorvorrichtung (130A, 130B, 130C) angeordnet ist, um:
Daten zu liefern, die mindestens den mindestens einen Token und Informationen umfassen, aus denen eine Position des Endgeräts (110) ableitbar ist.

18. Computerprogrammprodukt zur Bestimmung eines Zugangsrechts zu einem Kommunikationsdienst, wobei das Computerprogrammprodukt, wenn es von mindestens einem in einer Netzwerksteuerung enthaltenen Prozessor ausgeführt wird, die Netzwerksteuerung (120) veranlasst, das Verfahren nach einem der Ansprüche 1 bis 8 durchzuführen.

## Revendications

1. Procédé de détermination d'un droit d'accès à un service de communication, le procédé comprenant :
la génération (210), par un contrôleur de réseau (120), d'au moins un jeton pour au moins un dispositif terminal (110), la génération de l'au moins un jeton comprenant une transmission de l'au moins un jeton à l'au moins un dispositif terminal (110),
la réception (220), par le contrôleur de réseau (120), de données provenant d'au moins un dispositif capteur (130A, 130B, 130C), les données comprenant au moins l'au moins un jeton et des informations à partir desquelles une position du dispositif terminal (110) est déductible, la détermination (230), par le contrôleur de réseau (120), d'un droit d'accès au service de communication par :
la détermination que l'au moins un jeton est valide, le jeton étant l'un parmi : une clé de cryptage pour communiquer dans un réseau local sans fil disponible dans une zone où réside le dispositif terminal (110), une série de données comprenant un ou plusieurs caractères sélectionnés de manière aléatoire,
la détermination de la position du dispositif terminal (110) à partir des données à partir desquelles la position du dispositif terminal (110) peut être déduite,
la comparaison de la position du dispositif terminal (110) avec une valeur de référence, et
la génération, conformément à un résultat de la détermination que le jeton reçu par l'au moins un dispositif capteur (130A, 130B, 130C) est valide et à un résultat de la comparaison de la position du dispositif terminal (110) avec la valeur de référence, d'une indication représentative d'un droit d'accès au service de communication.

2. Procédé selon la revendication 1, dans lequel la génération de l'au moins un jeton (210) est effectuée en réponse à une requête reçue depuis le dispositif terminal (110) .

3. Procédé selon l'une quelconque des revendications précédentes, dans lequel la détermination (230) du droit d'accès au service de communication comprend en outre :
le fait de déterminer, par le contrôleur de réseau (120), si les données reçues comprennent l'au moins un jeton généré par le contrôleur de réseau (120).

4. Procédé selon la revendication 3, dans lequel la détermination est effectuée en comparant le jeton compris dans les données reçues de l'au moins un dispositif capteur (130A, 130B, 130C) à des données stockées dans le stockage de données en réponse à une génération (210) de l'au moins un jeton.

5. Procédé selon l'une quelconque des revendications précédentes, dans lequel un jeton individuel est généré, par le contrôleur de réseau (120), pour chaque dispositif terminal (110).

6. Procédé selon l'une quelconque des revendications précédentes, dans lequel la position du dispositif terminal (110) est déduite de données de mesure reçues de l'au moins un dispositif capteur (130A, 130B, 130C) par le contrôleur de réseau (120).

7. Procédé selon la revendication 6, dans lequel les données de mesure comprennent au moins une valeur de mesure représentant au moins un paramètre d'un signal reçu par l'au moins un dispositif capteur (130A, 130B, 130C).

8. Procédé selon l'une quelconque des revendications précédentes, dans lequel le service de communication est fourni au dispositif terminal (110) en réponse à une détection que l'indication générée représente une allocation d'une fourniture de service.

9. Contrôleur de réseau (120) comprenant :
au moins un processeur (410) ;
au moins une mémoire (420) comportant un code de programme informatique (421a-421n) ;
dans lequel l'au moins une mémoire (420) et le code de programme informatique (421a-421n) sont configurés pour, avec l'au moins un processeur (410), amener le contrôleur de réseau (120) à réaliser :
la génération (210) d'au moins un jeton pour au moins un dispositif terminal (110), une génération de l'au moins un jeton comprenant une transmission de l'au moins un jeton à l'au moins un dispositif terminal (110),
la réception (220) de données d'au moins un dispositif capteur (130A, 130B, 130C), les données comprenant au moins l'au moins un jeton et des informations à partir desquelles une position du dispositif terminal (110) peut être déduite,
la détermination (230) d'un droit d'accès au service de communication par :
la détermination que l'au moins un jeton est valide, le jeton étant l'un parmi : une clé de cryptage pour communiquer dans un réseau local sans fil disponible dans une zone où réside le dispositif terminal (110), une série de données comprenant un ou plusieurs caractères sélectionnés de manière aléatoire,
la détermination de la position du dispositif terminal (110) à partir des données à partir desquelles la position du dispositif terminal (110) peut être déduite, la comparaison de la position du dispositif terminal (110) avec une valeur de référence, et
la génération, conformément à un résultat de la détermination que le jeton reçu de l'au moins un dispositif capteur (130A, 130B, 130C) est valide et à un résultat de la comparaison de la position du dispositif terminal (110) avec la valeur de référence, d'une indication représentative d'un droit d'accès au service de communication.

10. Contrôleur de réseau (120) selon la revendication 9, dans lequel le contrôleur de réseau (120) est prévu pour effectuer la génération de l'au moins un jeton (210) en réponse à une requête reçue depuis le dispositif terminal (110).

11. Contrôleur de réseau (120) selon l'une quelconque des revendications précédentes 9 ou 10, dans lequel le contrôleur de réseau (120) est prévu pour effectuer la détermination du droit d'accès en déterminant si les données reçues comprennent l'au moins un jeton généré par le contrôleur de réseau (120).

12. Contrôleur de réseau (120) selon la revendication 11, dans lequel le contrôleur de réseau (120) est prévu pour effectuer la détermination en comparant le jeton compris dans les données reçues de l'au moins un dispositif capteur (130A, 130B, 130C) à des données stockées dans le stockage de données en réponse à une génération (210) de l'au moins un jeton.

13. Contrôleur de réseau (120) selon l'une quelconque des revendications précédentes 9 à 12, dans lequel le contrôleur de réseau (120) est prévu pour générer un jeton individuel pour chaque dispositif terminal (110).

14. Contrôleur de réseau (120) selon l'une quelconque des revendications précédentes 9 à 13, dans lequel le contrôleur de réseau (120) est prévu pour déduire la position du dispositif terminal (110) à partir de données de mesure reçues de l'au moins un dispositif capteur (130A, 130B, 130C) par le contrôleur de réseau (120) .

15. Contrôleur de réseau (120) selon la revendication 14, dans lequel les données de mesure comprennent au moins une valeur de mesure représentant au moins un paramètre d'un signal reçu par l'au moins un dispositif capteur (130A, 130B, 130C).

16. Contrôleur de réseau (120) selon l'une quelconque des revendications précédentes 9 à 15, dans lequel le contrôleur de réseau (120) est prévu pour fournir le service de communication au dispositif terminal (110) en réponse à une détection que l'indication générée représente une allocation d'une fourniture de service.

17. Système de communication, comprenant :
au moins un contrôleur de réseau (120), et
au moins un dispositif capteur (130A, 130B, 130C),
dans lequel l'au moins un contrôleur de réseau (120) est prévu pour :
la génération (210) d'au moins un jeton pour au moins un dispositif terminal (110), une génération de l'au moins un jeton comprenant une transmission de l'au moins un jeton à l'au moins un dispositif terminal (110),
la réception (220) de données d'au moins un dispositif capteur (130A, 130B, 130C), les données comprenant au moins l'au moins un jeton et des informations à partir desquelles une position d'un dispositif terminal (110) peut être déduite,
la détermination (230) d'un droit d'accès à un service de communication par :
la détermination que l'au moins un jeton est valide, le jeton étant l'un parmi : une clé de cryptage pour communiquer dans un réseau local sans fil disponible dans une zone où réside le dispositif terminal (110), une série de données comprenant un ou plusieurs caractères sélectionnés de manière aléatoire,
la détermination de la position du dispositif terminal (110) à partir des données à partir desquelles la position du dispositif terminal (110) peut être déduite,
la comparaison de la position du dispositif terminal (110) avec une valeur de référence, et
la génération, conformément à un résultat de la détermination que le jeton reçu de l'au moins un dispositif capteur (130A, 130B, 130C) est valide et à un résultat de la comparaison de la position du dispositif terminal (110) avec la valeur de référence, d'une indication représentative d'un droit d'accès au service de communication,
et dans lequel l'au moins un dispositif capteur (130A, 130B, 130C) est prévu pour :
la fourniture de données comprenant au moins l'au moins un jeton et des informations à partir desquelles une position du dispositif terminal (110) peut être déduite.

18. Produit de programme informatique pour déterminer un droit d'accès à un service de communication dans lequel le produit de programme informatique, lorsqu'il est exécuté par au moins un processeur compris dans un contrôleur de réseau, amène le contrôleur de réseau (120) à exécuter le procédé selon l'une quelconque des revendications 1 à 8.
